# EUROPÄISCHE PATENTANMELDUNG

(11) **EP 4 269 001 A1**
(43) Veröffentlichungstag der Anmeldung: **01.11.2023**
(21) Anmeldenummer: 22173826.3
(22) Anmeldetag: 17.05.2022
(51) Int. Cl.: B22F 10/28, B22F 10/38, B22F 10/85, B33Y 10/00, B33Y 50/02, B22F 3/11, B22F 10/366, G05B 19/4099, B22F 10/364

(54) **VERFAHREN ZUM SCHICHTWEISEN HERSTELLEN EINES OBJEKTS, 3D-DRUCKVORRICHUNG UND COMPUTERPROGRAMMPRODUKT**

(30) Priorität: 29.04.2022 EP 22170868
(71) Anmelder: Siemens Aktiengesellschaft, 80333 München (DE)
(72) Erfinder: Heinrichsdorff, Frank, 14513 Teltow (DE); Kastsian, Darya, 14612 Falkensee (DE); Reznik, Daniel, 13503 Berlin (DE)
(74) Vertreter: Siemens Patent Attorneys

(57) **Zusammenfassung**

Die Erfindung betrifft ein Verfahren zum schichtweisen Herstellen eines Objekts mit einem pulverbasierten 3D-Druckverfahren, eine 3D-Druckvorrichtung und ein Computerprogrammprodukt. Zunächst erfolgt das Analysieren von zu Beginn der Analyse festgelegten mechanischen Belastungswerten des zu druckenden Objekts mittels numerischer Verfahren. In einem nächsten Schritt erfolgt das Einteilen des Objekts in wenigstens einen ersten Bereich mit ersten mechanischen Belastungswerten und in wenigstens einen zweiten Bereich mit zweiten mechanischen Belastungswerten mit einer zwischen den Bereichen verlaufenden ersten Grenze, wobei die ersten Belastungswerte niedriger sind als die zweiten mechanischen Belastungswerte. In einem Folgeschritt erfolgt das Ermitteln von Druckbereichen, wobei eine zweite Grenze eingeführt wird, die stufenartig ausgebildet ist, und deren Stufen im ersten Bereich angeordnet sind.

## Beschreibung

Die Erfindung betrifft ein Verfahren zum schichtweisen Herstellen eines Objekts mit einem pulverbasierten 3D- Verfahren, eine 3D-Druckvorrichtung und ein Computerprogrammprodukt.

Der selektive Laserschmelz-Prozess (Selective Laser Melting, kurz: SLM) zählt zu den additiven Fertigungsverfahren und ermöglicht das Herstellen von drei-dimensionalen Objekten durch das schichtweise Verbinden von Pulver, insbesondere Metallpulver, mittels eines Laserstrahls.

Mittels des selektiven Laserschmelz-Prozesses ist es möglich, große spezifische Dichten der Bauteile zu erreichen. Das Herstellen großer spezifischer Dichten erfordert allerdings dünne Schichte. Dies verringert nachteilig die Herstellungsgeschwindigkeit. Größere Schichtdicken führen zwar zu einem beschleunigten Herstellungsprozess, aber auch zu einer geringeren Dichte, was nachteilig zu einer verringerten Festigkeit des Bauteils führen kann. Sind die Schichten zu dick, so können sie nicht mehr vollständig verbunden werden. Auch dies senkt die Dichte nachteilig, und damit auch die Festigkeit des Bauteils. Alternativ oder zusätzlich können die Geschwindigkeit des Lasers erhöht und/oder der Abstand zwischen nebeneinander liegenden Spuren vergrößert werden, um eine höhere Herstellgeschwindigkeit zu erreichen. Nachteilig verringern allerdings auch diese Maßnahmen die Festigkeit der Werkstücke. Dies wiederum verkürzt nachteilig die Lebensdauer der Druckobjekte oder kann sogar zu Objekten führen, welche für ihren Einsatz nicht stabil genug sind.

Es ist daher Aufgabe der vorliegenden Erfindung ein Verfahren anzugeben, welches Druckobjekte mit ausreichender Festigkeit bei höherer Druckgeschwindigkeit, also kürzere Herstellungsdauer, erzeugen kann.

Die Aufgabe wird erfindungsgemäß mit einem Verfahren gemäß Anspruch 1, einer 3D-Druckvorrichtung gemäß Anspruch 14 und einem Computerprogramm Produkt gemäß Anspruch 15 gelöst.

Das erfindungsgemäße Verfahren zum schichtweisen Herstellen eines Objekts mit einem pulverbasierten 3-D Druckverfahren umfasst mehrere Schritte. Es erfolgt das Analysieren von zu Beginn der Analyse festgelegten mechanischen Belastungswerten des zu druckenden Objekts mittels numerischer Verfahren. Anschließend erfolgt das Einteilen des Objekts in wenigstens einen ersten Bereich mit ersten mechanischen Belastungswerten und in wenigstens einen zweiten Bereich mit zweiten mechanischen Belastungswerten mit einer zwischen den Bereichen verlaufenden ersten Grenze, wobei die ersten mechanischen Belastungswerte niedriger sind als die zweiten mechanischen Belastungswerte. Anschließend erfolgt das Ermitteln von Druckbereichen, wobei eine zweite Grenze eingeführt wird, die stufenartig ausgebildet ist und deren Stufen im ersten Bereich angeordnet sind.

Die erfindungsgemäße 3D-Druckvorrichtung umfasst eine Recheneinheit, die eingerichtet ist, das erfindungsgemäße Verfahren auszuführen.

Das erfindungsgemäße Computerprogrammprodukt, welches direkt in einen Speicher einer programmierbaren Recheneinheit der 3D-Druckvorrichtung ladbar ist, umfasst Programmcode-Mittel, um das erfindungsgemäße Verfahren auszuführen, wenn das Computerprogrammprodukt in der Recheneinheit der 3D-Druckvorrichtung ausgeführt wird.

Vorteilhaft wird das zu druckenden Objekts somit in Bereiche eingeteilt, welche mit unterschiedlichen Druckparametern hergestellt werden können. Insbesondere können Bereiche, welche niedrige mechanische Belastungswerte aufweisen, mit höherer Schichtdicke oder kürzerer Belichtungszeit im Vergleich zu dem zweiten Bereich hergestellt werden. Vorteilhaft verkürzt dies die Herstellungszeit für das gesamte Objekt, wobei die Festigkeit der mechanisch belasteten Objektbereiche sicher gewährleistet werden kann. Insbesondere wenn in diesem zweiten Bereich Druckparameter gewählt werden, welche eine ausreichend hohe Festigkeit, insbesondere mittels einer ausreichend geringen Schichtdicke oder einer hohen Belichtungszeit, gewährleisten. Vorteilhaft kann somit der Durchsatz der Produktion von Objekten, also die Herstellungsgeschwindigkeit, erhöht werden, ohne die Gesamtleistungseigenschaften des Objekts zu erniedrigen.

Als mechanische Belastungen werden hier Spannungszustände verstanden, wobei Spannungen Zugspannungen, Druckspannungen und/oder Scherspannungen sind.

Als Festigkeit wird eine maximal zulässige oder verkraftbare Spannung verstanden, die das Material betrifft. Die Festigkeit ist also eine Materialeigenschaft.

Als Härtung wird eine lokale Erhöhung der Festigkeit oder des Eindringwiderstandes verstanden. Die Härtung stellt demnach auch eine Materialeigenschaft dar.

Die Grenzen zwischen den Bereichen sind typischerweise als Grenzflächen ausgebildet.

In einer weiteren vorteilhaften Ausgestaltung und Weiterbildung der Erfindung werden für die Flächen der Stufen, die parallel zur Schichtrichtung eines bestimmungsgemäß angeordneten Pulvers angeordnet sind, als ermittelter Druckbereich jeweils eine Abgleichsanalyse mit den mit numerischen Verfahren ermittelten Bereichen durchgeführt und für den Fall, dass eine gesamte Fläche in dem ersten Bereich angeordnet ist, diese Fläche mit ersten Druckparametern für eine erste Festigkeit gedruckt. Diese Festigkeit entspricht einer Festigkeit für niedrigere mechanische Belastungswerte. In einer weiteren Ausgestaltung wird für den Fall, dass wenigstens ein Teil der Fläche in dem zweiten Bereich angeordnet ist, diese Fläche mit zweiten Druckparametern für eine zweite Festigkeit gedruckt, wobei die erste Festigkeit niedriger als die zweite Festigkeit ist. In anderen Worten wird, sobald die Fläche auch nur minimal im zweiten Bereich angeordnet ist, die höhere Festigkeit für den Druck ausgewählt, um sicherzustellen, dass das Objekt eine ausreichende mechanische Belastbarkeit aufweist. Das Objekt wird also mit unterschiedlichen Druckparametern hergestellt, was vorteilhaft ermöglicht, eine schnelle Herstellung durchzuführen und dabei die Festigkeit, also die Qualität des zu druckenden Objekts, zu gewährleisten. Die Bereiche werden in anderen Worten vorteilhaft materialspezifisch und/oder anwendungsspezifisch bestimmt und gedruckt.

In einer weiteren vorteilhaften Ausgestaltung und Weiterbildung der Erfindung wird die Entfernung der Stufen von der ersten Grenze in dem ersten Bereich minimiert. In anderen Worten wird der erste Bereich möglichst groß definiert, um eine möglichst schnelle Herstellung des Objekts zu ermöglichen. Anders ausgedrückt, wird die stufenförmige zweite Grenze möglichst nah an erster Grenze, aber noch gerade so im ersten Bereich angeordnet.

In einer weiteren vorteilhaften Ausgestaltung und Weiterbildung der Erfindung wird die Fläche der Stufen in den ersten Bereich hinein erweitert. In anderen Worten heißt das, dass für den Fall, dass die Fläche parallel zu einem bestimmungsgemäß aufgetragenen Pulver angeordnet ist, diese analog zu einer Trittstufe ausgebildet ist und diese Trittstufe in den ersten Bereich hinein vergrößert wird. Die vergrößerte Fläche der Trittstufe ermöglicht einen erhöhten Abgleichswerteraum für die Abgleichsanalyse, was das Sicherstellen der Qualität vorteilhaft weiter erhöht. Weiterhin eröffnet es die Möglichkeit diesen Bereich zusätzlich zu verfestigen, um die Stabilität an der Stufenkante vorteilhaft sicher zu gewährleisten.

In einer weiteren vorteilhaften Ausgestaltung und Weiterbildung der Erfindung wird als die erste Grenze zwischen dem ersten und zweiten Bereich eine Vergleichsspannung, also in anderen Worten eine Grenzfläche konstanter Verspannung, eingesetzt. Diese bezeichnet eine fiktive einachsige Spannung, die aufgrund eines bestimmten werkstoffmechanischen oder mathematischen Kriteriums eine hypothetisch gleichwertige Materialbeanspruchung darstellt. Dies ist demnach zu sehen wie ein realer, mehrachsiger Spannungszustand. Zur Bestimmung der Grenzfläche konstanter Verspannung werden insbesondere Modelle basierend auf der van-Mises-Spannung, nach Tresca, nach Coulomb und vielen weiteren Modellen herangezogen. Diese Vergleichsspannung entspricht einem Grenzwert zwischen den ersten mechanischen Belastungswerten und den zweiten mechanischen Belastungswerten. Das Festlegen des Grenzwerts kann insbesondere nach einem Wert für Dauerschwingfestigkeit eines Metalls erfolgen. Diese liegt insbesondere bei der Hälfte der Streckgrenze einer Legierung. Beispielsweise kann eine Legierung mit einer Streckgrenze von 500 MPa, für das Material als Dauerschwingfest (das heißt mehr als 10^{∧}7 Schwingspielen) eine Vergleichsspannung von weniger als 250 MPa angenommen werden.

In einer weiteren vorteilhaften Ausgestaltung und Weiterbildung der Erfindung werden der erste Bereich und der zweite Bereich mit Druckparametern für unterschiedliche Porositätseigenschaften gedruckt. Insbesondere bedeutet eine erhöhte Porosität eine niedrigere Festigkeit, welche in dem ersten Bereich ausreichend ist. Vorteilhaft ermöglicht eine erhöhte Porosität auch eine Einsparung des Objektmaterials. Der zweite Bereich wird eine im Vergleich zum ersten Bereich ein niedrigere Porosität aufweisen, um dort eine ausreichende Festigkeit für die Belastungswerte des zweiten Bereichs zu gewährleisten. Insbesondere liegen in dem ersten Bereich Porositäten in einem Bereich von 1,5 % bis 5 % und in dem zweiten Bereich in einem Bereich von 0,1 % bis 0,5 % vor.

In einer weiteren vorteilhaften Ausgestaltung und Weiterbildung der Erfindung wird als das numerische Verfahren ein Finite-Elemente-Methode eingesetzt. Vorteilhaft ist die Finite-Elemente-Methode gegenüber der Finite-Differenzen-Methode leichter auf komplexe zweidimensionale und dreidimensionale Geometrien anwendbar und somit für das Bestimmen der Grenzen eine effektive Methode.

In einer weiteren vorteilhaften Ausgestaltung und Weiterbildung der Erfindung beträgt eine Tiefe der Stufe wenigstens 0,2 mm, bevorzugt wenigstens 0,5 mm besonders bevorzugt wenigstens 1 mm und maximal 5 mm. Das Wort Tiefe bezieht sich hier auf die Tiefe der Stufenfläche, welche parallel zu einem aufzubringenden Pulver ist und insofern eine Trittstufe (im Unterschied zu einer Setzstufe) einer Treppe darstellen würde. Als Tiefe wird somit der Abstand zwischen der innenliegenden Kante und der außen liegenden Kante der Trittstufe erachtet. Diese Untergrenze für die Stufentiefe vermeidet vorteilhaft eine Überhitzung des herzustellenden Objektes während der Herstellung. Ein Stufengröße oberhalb dieses Bereichs würde nachteilig zu einer zu groben Stufenform führen, wodurch der zweite Bereich unnötig groß würde, was wiederum die Herstellungsgeschwindigkeit nachteilig vergrößern würde. Ein zu großer erster Bereich würde wiederum nachteilig zu einer zu geringen Festigkeit führen.

In einer weiteren vorteilhaften Ausgestaltung und Weiterbildung der Erfindung wird der erweiterte Anteil der Fläche der Stufe zweimal verfestigt. Dies erhöht die Stabilität des Objekts in diesem Druckbereich vorteilhaft. Alternativ kann diese erweiterte Fläche mit angepassten Druckparametern, welche sich von den ersten und zweiten Druckparametern unterscheiden, gedruckt werden. Vorteilhaft wird eine ausreichend feste Verbindung des Pulvers für den Druck an dem Übergang des ersten Bereichs und des zweiten Bereichs somit gewährleistet.

In einer weiteren vorteilhaften Ausgestaltung und Weiterbildung der Erfindung liegt der Anteil der Fläche der Stufe in der Tiefe in einem Bereich von 2 bis 6 angrenzenden Belichtungs-Vektorabständen. In anderen Worten liegt die Tiefe des erweiterten Bereichs der Fläche der Trittstufe insbesondere in einem Bereich von 0,2 mm bis 0,6 mm. Bei zu kleiner Fläche der Trittstufe könnten nachteilig Defekte an der zweiten Grenze auftreten. Bei einer zu großen Fläche würde die Herstellungsgeschwindigkeit aufgrund der verstärkten Belichtung nachteilig sinken.

In einer weiteren vorteilhaften Ausgestaltung und Weiterbildung der Erfindung werden wenigstens drei Bereiche mittels der Belastungsanalyse ermittelt und dritte Druckparameter für eine dritte Festigkeit festgelegt, wobei die dritte Festigkeit zwischen der ersten und der zweiten Festigkeit liegt. Vorteilhaft ermöglicht dies eine maßgeschneiderte Verteilung der Festigkeit des zu druckenden Objekts im Hinblick auf dessen Einsatz, bzw. dessen mechanischen Belastungen. Vorteilhaft wird damit erreicht, dass bei einer erhöhten Druckgeschwindigkeit dennoch sichergestellt wird, dass das Objekt eine ausreichende Festigkeit in seinem Inneren aufweist.

In einer weiteren vorteilhaften Ausgestaltung und Weiterbildung der Erfindung weisen die ersten Druckparameter für den ersten Bereich eine höhere Schichtdicke, eine höhere Laserspotgeschwindigkeit, einen höheren Belichtungsvektorabstand und/oder einen alternativen Lasertyp, verglichen mit den Druckparametern für den zweiten Bereich, auf. Die Auswahl diese Druckparameter führen insbesondere zu einer niedrigeren Festigkeit und/oder zu einer höheren Porosität verglichen mit dem zweiten Bereich. Vorteilhaft werden damit höhere Druckgeschwindigkeiten erreicht.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: ein Druckobjekt mit einem ersten und zweiten Bereich und einer ersten Grenze;
- Figur 2: ein Druckobjekt mit einem ersten Bereich, einem zweiten Bereich, einer ersten Grenze und einer zweiten stufenförmigen Grenze;
- Figur 3: ein Druckobjekt mit einem ersten Bereich, einem zweiten Bereich, einer ersten Grenze, einer zweiten stufenförmigen Grenze und einer Flächenerweiterung;
- Figur 4: ein Druckobjekt mit einem ersten Bereich, einem zweiten Bereich, einer ersten Grenze, einer zweiten stufenförmigen Grenze, einer Flächenerweiterung und einer Gesamtfläche;
- Figur 5: ein Verfahrensschema des Verfahrens zum schichtweisen Herstellen eines Objektes mit einem pulverbasierten 3-D Druckverfahren.

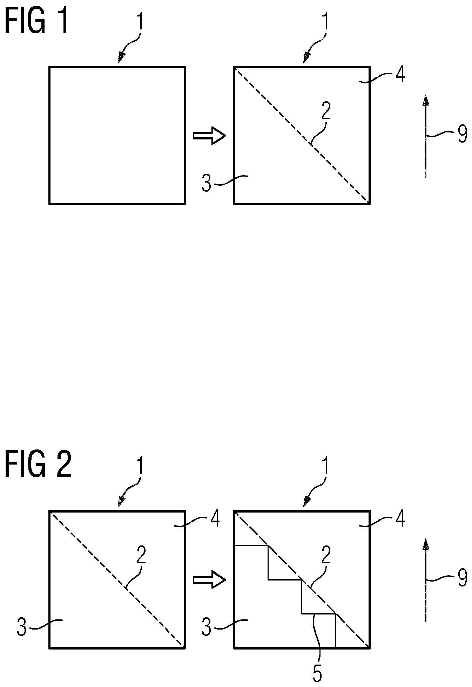

Figur 1 zeigt ein zu druckendes Objekt 1. Das Objekt 1 soll hier in Aufbaurichtung 9 von unten nach oben aufgebaut werden. Es werden horizontale Schichten eines Pulvers aufgetragen, welche insbesondere mit einem Laser verdichtet werden. Die Druckparameter können sich in Schichtaufbau, Laserspotgeschwindigkeit, Vektorabständen des Lesers unterscheiden. In Abhängigkeit der Druckparameter erhält das Druckobjekt unterschiedliche Festigkeiten, welche für unterschiedliche mechanische Belastungen geeignet sind.

In einem ersten Schritt wird das zu druckende Objekt 1 in einen ersten Bereich 3 und einen zweiten Bereich 4 eingeteilt, wobei die beiden Bereiche durch eine erste Grenze 2 voneinander abgetrennt werden. Der erste Bereich 3 weist niedrigere Belastungswerte auf als der zweite Bereich 4.

Als mechanische Belastungen werden hier Spannungszustände verstanden, wobei Spannungen Zugspannungen, Druckspannungen und/oder Scherspannungen sind.

Als Festigkeit wird eine maximal zulässige oder verkraftbare Spannung verstanden, die das Material betrifft. Die Festigkeit ist also eine Materialeigenschaft.

Als Härtung wird eine lokale Erhöhung der Festigkeit oder des Eindringwiderstandes verstanden. Die Härtung stellt demnach auch eine Materialeigenschaft dar.

Ein häufig eingesetztes Material ist beispielsweise austenitischer Stahl nach DIN 1.4404, AISI 316L. Die Porosität des ersten Bereichs 3 beträgt in diesem Beispiel 3%. Die Streckgrenze beträgt insbesondere im Wesentlichen 400 MPa, und damit ist eine Dauerschwingfestigkeit von im Wesentlichen 200 MPa anzunehmen. Der Bereich der Porosität des zweiten Bereichs beträgt weniger als 0,4 %, die Streckgrenze liegt im Wesentlichen bei 500 MPa.

Figur 2 zeigt das Einführen einer zweiten Grenze 5, welche stufenförmigen ausgebildet ist. Die zweite Grenze 5 liegt in dem ersten Bereich 3. Der Aufbau des Druckobjekts 1 erfolgt in Aufbaurichtung 9. In diesem Beispiel sind die horizontalen Stufen oder Trittstufen parallel zu einer Pulverschicht eines zu verfestigen Pulvers angeordnet. Besonders vorteilhaft wird der Abstand der zweiten Grenze 5 zur ersten Grenze 2 minimiert. Vorteilhafterweise wird somit ein größtmöglicher Druckbereich mit der ersten Festigkeit für den Bereich mit niedrigeren Belastungswerten im ersten Bereich 3 ausgeführt, was einen möglichst schnellen Druckvorgang ermöglicht.

Mittels der Finite-Elemente-Methode werden in diesem Beispiel die nominalen Lastbedingungen des Bauteils ermittelt. Die Grenze der Dauerschwingfestigkeit des ersten Bereichs wird in diesem Beispiel als erste Grenze verwendet, an welche die zweite stufenförmige Grenze angepasst wird. In diesem Fall liegen die Bauteilbereiche, deren Vergleichsspannung (insbesondere mittels des van-Mises-Modells ermittelten Vergleichsspannung) unter Betriebsbedingung unterhalb von insbesondere 200 MPa liegt, in dem ersten Bereich 3. Somit werden diese Bereiche mit den Druckparametern für den ersten Bereich 3 gedruckt. Die Bauteilbereiche deren Parameter gleich oder oberhalb von insbesondere 200 MPa unter Betriebsbedingungen liegen, werden als zweiter Bereich 4 definiert und mit Druckparametern für den zweiten Bereich 4 gedruckt.

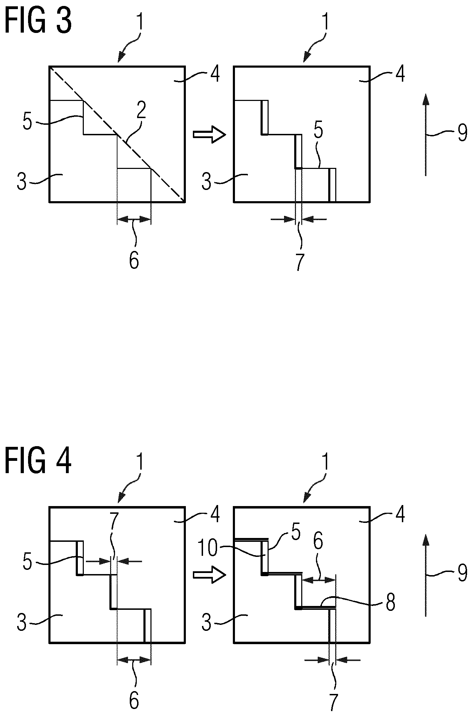

Nach diesem zweiten Schritt kann bereits das Drucken des Objektes 1 erfolgen. Es ist aber auch möglich, dass in einem dritten Schritt, wie in Figur 3 dargestellt, die Stufenfläche der Trittstufe in den ersten Bereich hinein erweitert wird. Es bildet sich ein Überlappbereich 10. Für das Drucken dieses Überlappbereichs 10 können dritte Druckparameter ausgewählt werden, welche eine dritte Festigkeit erzielen, welche zwischen der ersten Festigkeit des ersten Bereichs 3 und der zweiten Festigkeit des zweiten Bereichs 4 liegen. Es ist alternativ ebenso möglich, den Überlappbereich 10 zweifach zu verfestigen. Vorteilhaft führt dies dazu, dass die zweite Grenze zwischen dem ersten Bereich 3 und dem zweiten Bereich 4 mit Druckparametern für eine ausreichende, im Vergleich zum ersten Bereich erhöhte Festigkeit, hergestellt wird.

In einem optionalen vierten Schritt, welcher in Figur 4 dargestellt ist, wird die Gesamtfläche 8, also die gesamte Fläche der Trittstufe, analysiert. Es wird eine Abgleichsanalyse durchgeführt, welche überprüft, ob diese Grenzfläche komplett in dem ersten Bereich 3 angeordnet ist. Ist dies der Fall, so wird die gesamte Fläche mit den Druckparametern für den ersten Bereich 3 hergestellt. Liegt aber auch nur ein kleiner Teil der Gesamtfläche 8 in dem zweiten Bereich, so wird die gesamte Fläche 8 mit den Druckparametern für den zweiten Bereich 4, also der erhöhten Festigkeit, aufgebaut.

Die Baurate des ersten Bereichs 3 ist in diesem Beispiel dreifach höher als die Baurate des zweiten Bereichs 4.

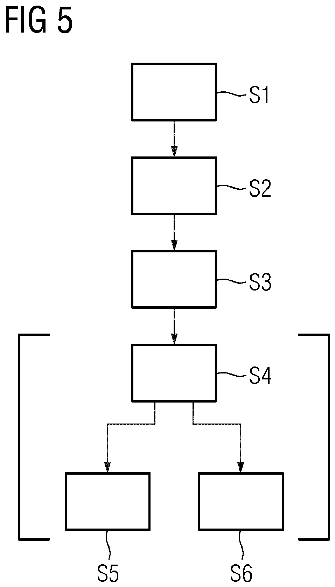

Figur 5 zeigt ein Verfahrensschema des Verfahrens zum schichtweisen Herstellen eines Objekts 1 mit mehreren Schritten. In einem ersten Schritt erfolgt das Analysieren von mechanischen Belastungswerten des zu druckenden Objektes 1. Mechanische Belastungen werden mittels numerischer Verfahren, insbesondere mit der Finite-Elemente-Methode, bestimmt. In einem zweiten Schritt erfolgt das Einteilen des Objekts 1 in einen ersten Bereich 3 und einen zweiten Bereich 4. Der erste Bereich 3 weist erste mechanische Belastungswerte auf. Der zweite Bereich 4 weist zweite mechanische Belastungswerte auf. Zwischen dem ersten Bereich 3 und dem zweiten Bereich 4 verläuft eine erste Grenze 2. Die ersten Belastungswerte des ersten Bereichs 3 sind niedriger als die zweiten Belastungswerte des zweiten Bereichs 4. In einem dritten Schritt S3 erfolgt das Ermitteln von Druckbereichen, wobei eine zweite Grenze 5 eingeführt wird, die stufenartig ausgebildet ist und deren Stufen im ersten Bereich 3 angeordnet sind. Nach diesem Schritt kann bereits das Drucken des Objektes 1 erfolgen. Der erste Bereich 3 wird dann mit ersten Druckparametern hergestellt. Der zweite Bereich 4 wird mit zweiten Druckparametern hergestellt. Die Festigkeit des ersten Bereichs 3 liegt unter der Festigkeit des zweiten Bereichs 4. Die Grenzfläche zwischen diesen beiden Bereichen ist als stufenförmige Fläche ausgebildet.

Alternativ zum Drucken des Objektes 1 kann zu diesem Zeitpunkt auch ein Abgleich der zweiten Grenze mit dem ersten Bereich 3 und dem zweiten Bereich 4 erfolgen. Es wird analysiert, ob die Stufenflächen, welche den Trittstufen entsprechen, komplett in dem ersten Bereich 3 angeordnet sind. Ist dies der Fall, so wird in einem fünften Schritt S5 die komplette Fläche mit den Druckparametern für den ersten Bereich 3 gedruckt. Ergibt die Analyse allerdings, dass auch nur ein kleiner Teil der Fläche der Trittstufe in den zweiten Bereich 4 hineinragt oder dort angeordnet ist, so wird die gesamte Fläche dieser Trittstufe in einem sechsten Schritt S6 mit den Druckparametern für den zweiten Bereich 4 hergestellt. Dies erhöht vorteilhaft die Festigkeit und Stabilität des zu druckenden Objektes 1.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

### Bezugszeichenliste

- 1: Objekt
- 2: Erste Grenze
- 3: Erster Bereich
- 4: Zweiter Bereich
- 5: Zweite Grenze
- 6: Fläche
- 7: erweiterte Fläche
- 8: Gesamtfläche
- 9: Aufbaurichtung
- 10: Überlappbereich
- S1: Analysieren von mechanischen Belastungswerten des zu druckenden Objekts
- S2: Einteilen des Objektes in einen ersten Bereich und einen zweiten Bereich und Bilden einer ersten Grenze
- S3: Ermitteln von Druckbereichen mit Einführen einer zweiten stufenartig ausgebildeten Grenze
- S4: Durchführen einer Abgleichsanalyse für Stufenflächen
- S5: Drucken der analysierten Fläche mit ersten Druckparametern des ersten Bereichs
- S6: Drucken der analysierten Fläche mit zweiten Druckparametern des zweiten Bereichs

## Patentansprüche

1. Verfahren zum schichtweisen Herstellen eines Objekts (1) mit einem pulverbasierten 3D-Druckverfahren umfassend mehrere Schritte:
- Analysieren von zu Beginn der Analyse festgelegten mechanischen Belastungswerten des zu druckenden Objekts (1) mittels numerischer Verfahren,
- Einteilen des Objekts (1) in wenigstens einen ersten Bereich (3) mit ersten mechanischen Belastungswerten und in wenigstens einen zweiten Bereich (4) mit zweiten mechanischen Belastungswerten mit einer zwischen den Bereichen verlaufenden ersten Grenze (2), wobei die ersten Belastungswerte niedriger sind als die zweiten mechanischen Belastungswerte,
- Ermitteln von Druckbereichen, wobei eine zweite Grenze (5) eingeführt wird, die stufenartig ausgebildet ist, und deren Stufen im ersten Bereich (3) angeordnet sind.

2. Verfahren nach Anspruch 1, wobei für die Flächen (8) der Stufen, die parallel zur Schichtrichtung eines in Aufbaurichtung bestimmungsgemäß angeordneten Pulvers angeordnet sind, als ermittelter Druckbereich jeweils eine Abgleichsanalyse mit den mit numerischen Verfahren ermittelten Bereichen durchgeführt wird und
- für den Fall, dass eine gesamte Fläche (8) in dem ersten Bereich (3) angeordnet ist, diese Fläche (8) mit ersten Druckparametern für eine erste Festigkeit gedruckt wird.

3. Verfahren nach Anspruch 2, wobei für den Fall, dass wenigsten ein Teil der Fläche (8) in dem zweiten Bereich (4) angeordnet ist, diese Fläche (8) mit zweiten Druckparametern für eine zweite Festigkeit gedruckt wird, wobei die erste Festigkeit niedriger als die zweite Festigkeit ist.

4. Verfahren nach einem der vorhergehenden Ansprüche, wobei die Entfernung der zweiten Grenze (5) von der ersten Grenze (2) in dem ersten Bereich (3) minimiert wird.

5. Verfahren nach einem der vorhergehenden Ansprüche, wobei die Fläche (8) in den ersten Bereich (3) hinein erweitert wird.

6. Verfahren nach einem der vorhergehenden Ansprüche, wobei als die erste Grenze (2) zwischen dem ersten (3) und zweiten Bereich (4) eine Grenzfläche Fläche konstanter Verspannung eingesetzt wird.

7. Verfahren nach einem der vorhergehenden Ansprüche, wobei der erste Bereich (3) und der zweite Bereich (4) mit Druckparametern für unterschiedliche Porositätseigenschaften gedruckt werden.

8. Verfahren nach einem der vorhergehenden Ansprüche, wobei als das numerische Verfahren ein Finite-Elemente-Methode eingesetzt wird.

9. Verfahren nach einem der vorhergehenden Ansprüche, wobei eine Tiefe der Stufe (6) wenigstens 0,2 mm, bevorzugt wenigstens 0,5 mm, besonders bevorzugt wenigstens 1 mm und maximal 5 mm beträgt.

10. Verfahren nach einem der Ansprüche 5 bis 9, wobei der erweiterte Anteil der Fläche der Stufe (7) zweimal verfestigt und/oder zweimal belichtet wird.

11. Verfahren nach einem der Ansprüche 5 bis 10, wobei der erweiterte Anteil der Fläche der Stufe (7) in der Tiefe in einem Bereich von zwei bis sechs angrenzenden Belichtungsvektorabständen liegt, wobei die Tiefe (7) insbesondere in einem Bereich von 0,2 mm bis 0,6 mm liegt.

12. Verfahren nach einem der vorhergehenden Ansprüche, wobei wenigsten drei Bereiche mittels der Belastungsanalyse ermittelt werden und dritte Druckparameter für eine dritte Festigkeit festgelegt werden, wobei die dritte Festigkeit zwischen der ersten und der zweiten Festigkeit liegt.

13. Verfahren nach einem der vorhergehenden Ansprüche, wobei die ersten Druckparameter für den ersten Bereich (3) eine höhere Schichtdicke, eine höhere Laserspotgeschwindigkeit, eine höheren Belichtungsvektorabstand und/oder einen alternativen Lasertyp verglichen mit den Druckparametern für den zweiten Bereich (4) aufweisen.

14. 3D-Druckvorrichtung mit einer Recheneinheit, eingerichtet zum Ausführen eines Verfahrens gemäß einem der Ansprüche 1 bis 13.

15. Computerprogrammprodukt, welches direkt in einen Speicher einer programmierbaren Recheneinheit der 3D-Druckvorrichtung ladbar ist, mit Programmcode-Mitteln, um ein Verfahren nach einem der Ansprüche 1 bis 13 auszuführen, wenn das Computerprogrammprodukt in der Recheneinheit der 3D-Druckvorrichtung ausgeführt wird.
